# EUROPEAN PATENT APPLICATION

(11) **EP 3 182 347 A1**
(43) Date of publication of application: **21.06.2017**
(21) Application number: 16204813.6
(22) Date of filing: 16.12.2016
(51) Int. Cl.: G06Q 10/06, G06F 21/31, G06Q 10/10, G01R 31/02

(54) **PROJECT DOCUMENTATION SHARING AND COLLABORATION IN A CLOUD-BASED ENVIRONMENT**

(30) Priority: 16.12.2015 US 201514971711
(71) Applicant: Fluke Corporation, Everett, WA 98203 (US)
(72) Inventor: BEZOLD, David. E, Mukilteo, Washington 98275 (US); WOOTON, Clinton J., Lake Stevens, Washington 98258 (US)
(74) Representative: HGF Limited

(57) **Abstract**

A cloud-based document management system provides a user access to project documentation. The document management system includes a plurality of mobile and testing devices running a client application and a cloud-based server device configured to couple to the plurality of mobile and testing devices. The server device includes at least one database configured to store a plurality of project documents and a processor configured to process a request from the client application. The request specifies access for a user to one or more of the plurality of project documents. The request includes user's authentication information. The processor is further configured to authenticate the user based on the received authentication information. The processor is also configured to grant the user access to the requested one or more project documents in response to successfully authenticating the user.

## Description

### BACKGROUND

### Technical Field

The disclosed embodiments generally relates to network cabling testing, and more particularly, to project documentation sharing and collaboration in a cloud-based environment.

Generally described, the field of construction project management and bidding has traditionally been characterized by complex business processes involving the exchange and maintenance of a large number of physical documents. Such projects may be advertised in various publications or through invitations to bid directed at known contractors. A project owner may utilize email and fax transmission technologies to exchange documents related to construction projects. These files are commonly printed, manually edited then scanned and sent between a contractor and his customer for approval. The current processes are labor intensive, costly and prone to errors and loss.

During the bid process, potential bidders (*e*.*g*., contractors) are typically provided with a specified period of time during which they may evaluate the project, determine quantities, and arrange for bids from sub-contractors and suppliers. Bidders may be provided with a bid form by the project owner, allowing the bidder to specify determined prices and other required information. The bid form and any other required information is typically formally submitted in hardcopy to the project owner in a prescribed format. Depending upon the process specified the bid may also include other documents that are submitted separately. Current technologies enable the rapid exchange of documents, yet they fall short in the areas of collaboration and document tracking.

### BRIEF SUMMARY

The purpose and advantages of the below described illustrated embodiments will be set forth in and apparent from the description that follows. Additional advantages of the illustrated embodiments will be realized and attained by the devices, systems and methods particularly pointed out in the written description and claims hereof, as well as from the appended drawings.

To achieve these and other advantages and in accordance with the purpose of the illustrated embodiments, in one aspect, a cloud-based document management system providing a user access to project documentation is described. The document management system includes a plurality of mobile and testing devices running a client application and a cloud-based server device configured to couple to the plurality of mobile and testing devices. The server device includes at least one database configured to store a plurality of project documents and a processor configured to process a request from the client application. The request specifies access for a user to one or more of the plurality of project documents. The request includes user's authentication information. The processor is further configured to authenticate the user based on the received authentication information. The processor is also configured to grant the user access to the requested one or more project documents in response to successfully authenticating the user.

### BRIEF DESCRIPTION OF THE SEVERAL VIEWS OF THE DRAWINGS

The accompanying appendices and/or drawings illustrate various non-limiting, example, inventive aspects in accordance with the present disclosure:
FIG. 1 depicts an exemplary communications network in which below illustrated embodiments may be implemented;
FIG. 2 depicts an example network device/node which may be used with the below illustrated embodiments;
FIGS. 3A and 3B depict a cabling testing system 300 in accordance with the below illustrated embodiments; and
FIG. 4 is a flowchart depicting an illustrated method of operation of the illustrated embodiments.

### DETAILED DESCRIPTION

The illustrated embodiments are now described more fully with reference to the accompanying drawings wherein like reference numerals identify similar structural/functional features. The illustrated embodiments are not limited in any way to what is illustrated as the illustrated embodiments described below are merely exemplary, which can be embodied in various forms, as appreciated by one skilled in the art. Therefore, it is to be understood that any structural and functional details disclosed herein are not to be interpreted as limiting, but merely as a basis for the claims and as a representation for teaching one skilled in the art to variously employ the discussed embodiments. Furthermore, the terms and phrases used herein are not intended to be limiting but rather to provide an understandable description of the illustrated embodiments.

Unless defined otherwise, all technical and scientific terms used herein have the same meaning as commonly understood by one of ordinary skill in the art to which this invention belongs. Although any methods and materials similar or equivalent to those described herein can also be used in the practice or testing of the illustrated embodiments, exemplary methods and materials are now described.

It must be noted that as used herein and in the appended claims, the singular forms "a", "an," and "the" include plural referents unless the context clearly dictates otherwise. Thus, for example, reference to "a stimulus" includes a plurality of such stimuli and reference to "the signal" includes reference to one or more signals and equivalents thereof known to those skilled in the art, and so forth.

It is to be appreciated the illustrated embodiments discussed below are preferably a software algorithm, program or code residing on computer useable medium having control logic for enabling execution on a machine having a computer processor. The machine typically includes memory storage configured to provide output from execution of the computer algorithm or program.

As used herein, the term "software" is meant to be synonymous with any code or program that can be in a processor of a host computer, regardless of whether the implementation is in hardware, firmware or as a software computer product available on a disc, a memory storage device, or for download from a remote machine.

As used herein, the terms "user devices" or "user computing devices" encompass all computing devices with access (direct or indirect) to the project document management platform described below. While, in one or more embodiments, project data is input by members of the construction project teams using one or more mobile devices, the content of the project document management platform may be presented to all user devices. For example, following the input of the data by the members of the construction project teams, entered data may be presented to construction project teams, corporate management, outside contractors or professionals, government inspectors, collaborating companies, etc.

As used herein, the term "project data" includes information related to one or more project elements that is submitted by a user. In one or more embodiments of the invention, project data may be entered directly into the existing content (*e*.*g*., floor plans) of the project document management platform. Alternatively, in one or more embodiments of the invention, project data must first be reviewed and accepted by one or more users before it is incorporated into the existing document management database. Project data may be automatically generated or solicited by the project document management platform, for example, using topic-specific questions. Alternatively, users may add project data without such prompting. Project data may include, for example, project estimates information, subcontractor information, blueprints, measured drawings (commonly referred to as "as-builts"), change orders, and the like.

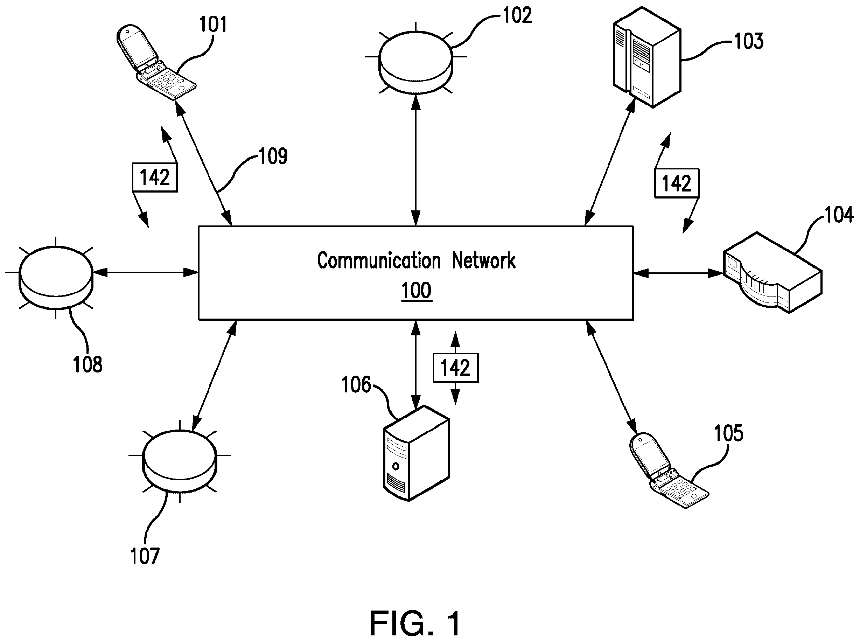

Turning now descriptively to the drawings, in which similar reference characters denote similar elements throughout the several views, FIG. 1 depicts an exemplary communications network 100 in which below illustrated embodiments may be implemented.

It is to be understood a communication network 100 is a geographically distributed collection of nodes interconnected by communication links and segments for transporting data between end nodes, such as personal computers, work stations, smart phone devices, tablets, televisions, sensors and or other devices such as automobiles, etc. Many types of networks are available, with the types ranging from local area networks (LANs) to wide area networks (WANs). LANs typically connect the nodes over dedicated private communications links located in the same general physical location, such as a building or campus. WANs, on the other hand, typically connect geographically dispersed nodes over long-distance communications links, such as common carrier telephone lines, optical lightpaths, synchronous optical networks (SONET), synchronous digital hierarchy (SDH) links, or Powerline Communications (PLC), and others.

FIG. 1 is a schematic block diagram of an example communication network 100 illustratively comprising nodes/devices 101-108 *(e.g.,* sensors 102, client computing devices 103, smart phone devices 105, web servers 106, cable testing device 107, switches 108, and the like) interconnected by various methods of communication. For instance, the links 109 may be wired links or may comprise a wireless communication medium, where certain nodes are in communication with other nodes, *e.g.,* based on distance, signal strength, current operational status, location, etc. Moreover, each of the devices can communicate data packets (or frames) 142 with other devices using predefined network communication protocols as will be appreciated by those skilled in the art, such as various wired protocols and wireless protocols etc., where appropriate. In this context, a protocol consists of a set of rules defining how the nodes interact with each other. Those skilled in the art will understand that any number of nodes, devices, links, etc. may be used in the computer network, and that the view shown herein is for simplicity. Also, while the embodiments are shown herein with reference to a general network cloud, the description herein is not so limited, and may be applied to networks that are hardwired.

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of the present invention may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

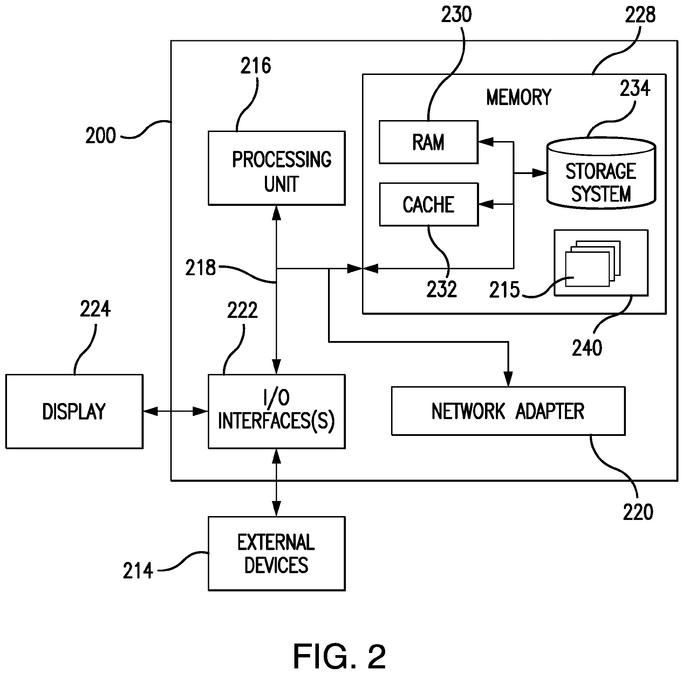

FIG. 2 is a schematic block diagram of an example network computing device 200 *(e.g.,* client computing device 103, server 106, smart phone device 105, cable testing device 107) that may be used (or components thereof) with one or more embodiments described herein, *e.g.,* as one of the nodes shown in the network 100. As explained above, in different embodiments these various devices are configured to communicate with each other in any suitable way, such as, for example, via communication network 100.

Device 200 is intended to represent any type of computer system capable of carrying out the teachings of various embodiments of the present invention. Device 200 is only one example of a suitable system and is not intended to suggest any limitation as to the scope of use or functionality of embodiments of the invention described herein. Regardless, computing device 200 is capable of being implemented and/or performing any of the functionality set forth herein.

Computing device 200 is operational with numerous other general purpose or special purpose computing system environments or configurations. Examples of well-known computing systems, environments, and/or configurations that may be suitable for use with computing device 200 include, but are not limited to, personal computer systems, server computer systems, thin clients, thick clients, handheld or laptop devices, multiprocessor systems, microprocessor-based systems, set top boxes, programmable consumer electronics, network PCs, minicomputer systems, and distributed data processing environments that include any of the above systems or devices, and the like.

Computing device 200 may be described in the general context of computer system-executable instructions, such as program modules, being executed by a computer system. Generally, program modules may include routines, programs, objects, components, logic, data structures, and so on that perform particular tasks or implement particular abstract data types. Computing device 200 may be practiced in distributed data processing environments where tasks are performed by remote processing devices that are linked through a communications network. In a distributed data processing environment, program modules may be located in both local and remote computer system storage media including memory storage devices.

Device 200 is shown in FIG. 2 in the form of a general-purpose computing device. The components of device 200 may include, but are not limited to, one or more processors or processing units 216, a system memory 228, and a bus 218 that couples various system components including system memory 228 to processor 216.

Bus 218 represents one or more of any of several types of bus structures, including a memory bus or memory controller, a peripheral bus, an accelerated graphics port, and a processor or local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus.

Computing device 200 typically includes a variety of computer system readable media. Such media may be any available media that is accessible by device 200, and it includes both volatile and non-volatile media, removable and non-removable media.

System memory 228 can include computer system readable media in the form of volatile memory, such as random access memory (RAM) 230 and/or cache memory 232. Computing device 200 may further include other removable/non-removable, volatile/non-volatile computer system storage media. By way of example only, storage system 234 can be provided for reading from and writing to a non-removable, non-volatile magnetic media (not shown and typically called a "hard drive"). Although not shown, a magnetic disk drive for reading from and writing to a removable, non-volatile magnetic disk *(e.g.,* a "floppy disk"), and an optical disk drive for reading from or writing to a removable, non-volatile optical disk such as a CD-ROM, DVD-ROM or other optical media can be provided. In such instances, each can be connected to bus 218 by one or more data media interfaces. As will be further depicted and described below, memory 228 may include at least one program product having a set *(e.g.,* at least one) of program modules that are configured to carry out the functions of embodiments of the invention.

Program/utility 240, having a set (at least one) of program modules 215, such as document control module, may be stored in memory 228 by way of example, and not limitation, as well as an operating system, one or more application programs, other program modules, and program data. Each of the operating system, one or more application programs, other program modules, and program data or some combination thereof, may include an implementation of a networking environment. Program modules 215 generally carry out the functions and/or methodologies of embodiments of the invention as described herein.

Device 200 may also communicate with one or more external devices 214 such as a keyboard, a pointing device, a display 224, etc.; one or more devices that enable a user to interact with computing device 200; and/or any devices (*e*.*g*., network card, modem, etc.) that enable computing device 200 to communicate with one or more other computing devices. Such communication can occur via Input/Output (I/O) interfaces 222. Still yet, device 200 can communicate with one or more networks such as a local area network (LAN), a general wide area network (WAN), and/or a public network (*e*.*g*., the Internet) via network adapter 220. As depicted, network adapter 220 communicates with the other components of computing device 200 via bus 218. It should be understood that although not shown, other hardware and/or software components could be used in conjunction with device 200. Examples, include, but are not limited to: microcode, device drivers, redundant processing units, external disk drive arrays, RAID systems, tape drives, and data archival storage systems, etc.

FIGS. 1 and 2 are intended to provide a brief, general description of an illustrative and/or suitable exemplary environment in which embodiments of the below described present invention may be implemented. FIGS. 1 and 2 are exemplary of a suitable environment and are not intended to suggest any limitation as to the structure, scope of use, or functionality of an embodiment of the present invention. A particular environment should not be interpreted as having any dependency or requirement relating to any one or combination of components illustrated in an exemplary operating environment. For example, in certain instances, one or more elements of an environment may be deemed not necessary and omitted. In other instances, one or more other elements may be deemed necessary and added.

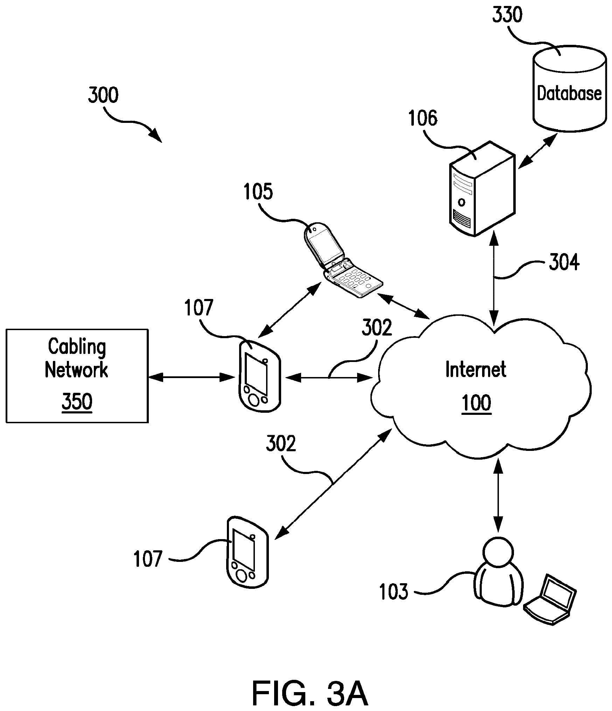

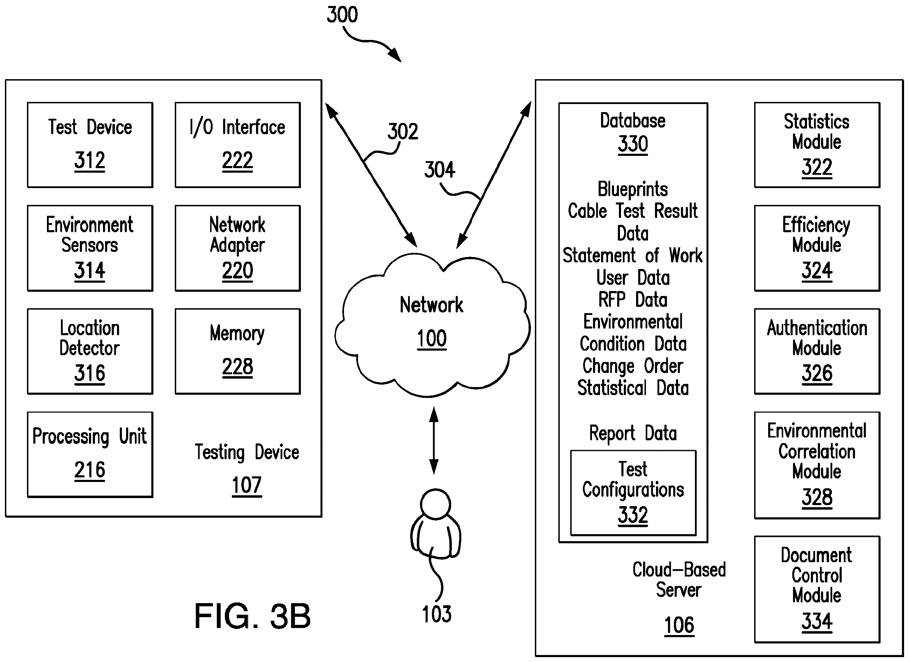

With the exemplary communication network 100 (FIG. 1) and computing device 200 (FIG. 2) being generally shown and discussed above, description of certain illustrated embodiments of the present invention will now be provided. With reference now to FIGS. 3A and 3B, a cloud-based network testing system 300 includes a plurality of cabling testing devices 107 (as described below). It is to be appreciated a cloud-based server/host 106 (as also described below) receives test result data from different testing devices 107 regarding various functions including, but not limited to: generating statistics related to the testing devices 107 and authenticating test result data received from testing devices 107.

It is to be appreciated that for ease of illustration purposes, only usage of a single testing device 107 is described, however, it is to be understood cabling testing system 300 may involve the simultaneous use of a plurality devices 107. An example testing device 107 is a portable tool than can include a computer system that functions as a node of a network which is similar to communication network 100 shown in FIG. 1. Similarly, the server 106 can be a web server that includes a computer system that functions as a node of network 100.

The testing device 107 preferably communicates with the network 100 using a first communication link 302, and the server 106 communicates with the network 100 using a second communication link 304. The first and second communication links 302, 304 can each include a single or multiple wired and/or wireless links. In embodiments, some of these links use near-field communication, such as radio frequency identification (RFID), cellular telecommunication schemes *(e.g.,* 3G, LTE), Bluetooth, infrared communication, or the like. In embodiments, the network 100 includes the Internet. The testing device 107 can be selectively coupled (using its internal communication components) to the network 100 so that the first communication link 302 can be intermittent, *e*.*g*., disrupted and reestablished. The second communication link 304 can be stable and readily available during operation times for communicating with the testing device 107. In other embodiments, the testing devices 107 communicate indirectly with the cloud-based server 106 via a communication device 105, such as a mobile phone, tablet, or laptop computer.

The testing device 107 and the cloud-based server 106 can each be configured similarly to the network computing device 200 shown in FIG. 2, such as to include a processing unit 216, a network adapter 220, an I/O interface 222, and memory 228.

It is to be understood network testing system 300 may encompass a variety of different types of cabling testing devices 107. Examples include, and are not limited to the flowing Fluke Network® instruments: OptiFiber® Pro OTDR; CertiFiber® Pro Optical Loss Test Set and the DSX-5000 CableAnalyzer™. It is to be further appreciated the illustrated embodiments of the present disclosure encompass tests for network cable including diagnostics, verification, qualification, and certification. With regards to certification testing, and as a non-limiting example, the Versiv™ product from Fluke Network® may be used to facilitate such cable certification.

The testing device 107 may allow simultaneous operation of multiple applications. It is to be appreciated the testing device 107 may include an operating system (e.g., Linux) embedded hardware/server. As described further below, using a combination of the features of an operating system, the testing device 107 may be configured to receive firmware updates, test configurations and notifications related to project documents by a network connection preferably via the Internet 100. As also explained further below, the test configurations are preferably software packets sent from a cloud-based server device 106 (via network 100) to a testing device 107 to enable/configure the testing device 107 to perform predetermined testing routines upon a network 350 to be tested by a testing device 107.

In operation, the testing device 107 may conduct a cabling test, *e.g.,* for diagnostics, verification, certification, or qualification of copper or fiber cable. Cables to be tested can include low-voltage CAT3, CAT5, CAT5E, CAT6, UTP, STP, SSTP and/or FTP data cables, standard voltage electrical wiring, and/or connectors (*e*.*g*., connecting devices) that connect two or more cables) that form a portion of a network within a premise *(e.g.,* a home, office, school, and the like). In an example test procedure, one or more ports of the testing device's I/O interface 222 are coupled to at least one of a patch panel port of a patch panel in a data closet via patch cables for exchanging test signals and responses to test signals. Test procedures can include, for example, a cable integrity test or a network connectivity test associated with one or more networked devices (e.g., routers, switches, end-devices, etc.).

As shown in FIG. 3B, the testing device 107 is typically a portable device that can further include a test device 312, environmental sensors 314, and/or a location detector 316. The test device 312 includes one or more sensors to measure electrical characteristics of a signal or power source. The environmental sensors 314 include one or more sensors to measure a characteristic of a physical entity, such as temperature, humidity, an exerted force, etc. Environmental sensors 314 can further detect electromagnetic interference (*e*.*g*., radio frequency interference), such as to determine proximity to devices that emit electromagnetic energy. The test device 312 and environmental sensors 314 can include an analog-to-digital (A/D) converter to convert the output signals into digital data. The output from the test device 312 and environmental sensors 314 can be time-stamped.

The location detector 316 senses a location of the testing device 107. The location detector 316 can include a Global Positioning System (GPS) sensor. In embodiments, the location detector 316 can include sensors that detect a characteristic, such as an optical code or RFID code, associated with a fixed device having a known location.

Additionally, in embodiments, the location detector 316 can include a device that is external from the testing device 107, and/or included in the cloud-based server 106. In an embodiment, the location detector 316 can be associated with a fixed device having a known location. The location detector 316 associated with the fixed device can sense the presence of the testing device 107, *e.g.,* using optical sensing, RFID, Bluetooth, etc. In another embodiment, the location detector 316 included in the testing device 107 can detect the fixed device and use the location of the fixed device. In either of these scenarios, the location of fixed device can be used to determine the location of the testing device 107. Further, in embodiments, the location detector 316 can include logic to infer location of the testing device 107 from network signals such as IP address, RFID, WIFI, and Bluetooth MAC addresses, and/or a GSM/CDMA cell ID associated with the testing device 107. The location detector 316 outputs time-stamped location data indicative of a location of the testing device 107. The location data can include geolocation data and/or a position of the testing device 107 inside a building, such as relative to a floor map.

The test device 312, environment sensors 314, and location detector 316 can include hardware and software modules (*e*.*g*., program modules 215 stored by memory 228 of the server 106).

The testing device's I/O interface 222 can include one or more cable ports *(e.g.,* an Ethernet port, data cable jacks such as RJ 45 jacks, wire clamps, optical ports, and the like), that interface with a cable, such as a patch cord. Test signals and responses can be transmitted and received via the cable ports.

The testing device's processing unit 216 is configured to select test signals to transmit via the cable ports (*e*.*g*., pings) pursuant to test configuration instructions typically stored in the device memory 228. The processing unit 216 can further process signals received in response to transmission of the test signals via the ports. The processing unit 216 can process output received from the test device 312 and the environmental sensors 314, perform one or more circuit and/or network connectivity diagnostic tests, and generates corresponding test result data pursuant to specific test configuration instructions. The test result data can include metadata and data that provides information about the test procedure and the test results.

Examples of information that the test result data and associated metadata can further provide include: information about a time that the testing procedure was begun and finished; identification of one or more operators operating the testing device 107; identification of the testing device 107; identification of a patch cord coupled to the testing device 107; identification of the cable under test; location data indicating a geographic location at the time of the testing procedure; environmental conditions at the time of the testing procedure; identification of the testing procedure being performed and/or a project that the testing procedure belongs to.

The testing device 107 can include a display device 224 or provide displayable test result data to a remote device, such as a mobile device (*e*.*g*., device 105). External devices 214 coupled to the testing device 107 can include a user input device *(e.g.,* a keyboard, touchscreen *(e.g.,* display device 224), and/or biometric sensor) via which an operator can enter user identification information (user ID). Entry of the user ID can be time stamped, and can be used to authorize use of the testing device 107 by the user. The input device can be used to send user input or requests to the cloud-based server 106. For example, if a user notices an anomaly in operation of a network cable, the user can send an alert to the cloud-based server 106 so that the cloud-based server can investigate if there is a correlation between the anomaly and environmental conditions indicated by output from the environment sensors 314.

The cloud-based server 106 receives the test result data from the plurality of testing devices 107. It is to be appreciated the cloud-based server 106 may implement the LinkWare™ Live product from Fluke Network® to store and manage test result data received from remote testing devices 107 as well as to transmit test configurations and/or project data related notifications to a testing device 107 as described further below.

The cloud-based server 106 preferably includes a statistics module 322, an efficiency module 324, an authentication module 326, and an environmental correlation module 328, each of which can include software modules (*e*.g., program modules 215 stored by memory 228 of the server 106).

In accordance with an illustrated embodiment, a plurality of test configuration setups 332 are stored in the database 330 associated with the cloud-based server 106 as described further below, which test configurations 332 are remotely selectable by either a user of a testing device 107 or a remote user 103 of a testing device 107 so as to be "downloaded" from the cloud-based server 106 to a remotely located testing device 107 for execution by the testing device 107.

A remote user 103 via a user computing device (*e*.*g*., node smartphone device 105, a client computing device 103, or the testing device 107) may access a cloud-based project document management platform provided by the cloud-based server 106 to request and/or receive project related information output by the cloud-based server 106. In an example embodiment, access to the cloud-based service can be provided by web-browser software resident on the user computing device running applications (*e*.*g*., Java applets or other applications), which may include application programming interfaces ("API's") to more sophisticated applications running on remote servers.

In an example embodiment, through web-browser software, a user can use a computer 103 to log on to cloud-based services (*e*.*g*., by the web-browser software resident on the computer 103 communicating with cloud-based server device 106) to access cloud-based applications for one or more testing devices 107. After logging-on to a cloud-based application on server 106, the user may create, edit, save and delete aforesaid cable testing configurations in the cloud-based server device 106, and may establish (set up) or change/edit various options, such as user preferences and/or system settings, and/or may receive or download software (*e*.g., operating system or other software) or software updates, various data files or media files, project documents, notifications, user preferences and/or system settings, and other information previously stored on the cloud-based server device 106.

In accordance with an illustrated embodiment, the cloud-based application implemented on the cloud-based server device 106 may receive, send, modify, arrange for storage of, and/or otherwise process content and/or associated project data. The cloud-based server 106 may also provide additional functionality necessary to perform the embodiments of the invention. For example, the server 106 may interact with a project team, an employer of the project team, a building owner, or a client to which the project team provides project updates and reports. In one or more embodiments of the invention, the cloud-based server 106 may interact with a local authority, an inspector, or any other authority that validates or reviews a construction company's project records.

The cloud-based server 106 includes or is coupled to a database 330 that stores information for a plurality of testing devices 107 that can couple to the cloud-based server 106 via network 100. Information stored by the database 330 can include, for example, cable test result data, operator data, environmental condition data, statistic data, and/or report data. In addition, the database 330 may serve as a project data repository supporting the storage needs of the cloud-based server 106. The project data stored by the database 330 can include, for example, building floor plans, project estimates, "as-builts" drawings, change orders, requests for proposal, requests for quote, requests for information, certified test records, testing device operator time cards, and/or other similar project related documents. In one or more embodiments of the invention, the database 330 is a device capable of storing information and retrieving the stored information by interacting with or independently of the cloud-based server 106. The database 330 may be, for example, one or more magnetic storage devices, optical storage devices, flash memory, or other similar devices. In one or more embodiments of the invention, the database 330 is able to index the stored information by various attributes (such as a source of data or edit, time data or edit received, time data or edit approved, identity of approver, notification requirements associated with data, or other identifiers associated with data). In one or more embodiments, the database 330 may store project data as it is modified or added by the users. In one or more embodiments of the invention, an administrator can specify operational parameters for storing project data and making it available to various users having different security permissions.

In one or more embodiments of the invention, the cloud-based server 106 includes a document control module 334, which can also include software modules (e.g., program modules 215 stored by memory 228 of the server 106). In one or more embodiments of the invention, the document control module 334 is preferably configured to accept project data from users (*e*.*g*., project team members, contractors, etc.) and transform it into rich media content. In this context, rich media means to present content using multimedia, such as, for example, text, images, video, audio, and other multimedia types. In one or more embodiments of the invention, the document control module 334 allows users to directly add and/or modify project data content. Modifying project data content may take many forms. For example, a user may upload a file relating to the project. In one or more embodiments of the invention, the document control module 334 may track which users submitted particular documents (including comments or modifications to baseline documents). In one or more embodiments of the invention, all proposed project changes (*e*.*g*., statement of work, change order documents, project estimates modifications, etc.) must first be reviewed and approved by one or more users (*e*.*g*., authorized administrators).

In one or more embodiments of the invention, the document control module 334 may be configured to automatically track the progression of the project, forecast needs for particular documents and at a particular project phase, generate additional documents by analyzing stored content and/or solicit project data from users as required by the project. The processes used to dynamically generate project data and solicit project data from users are discussed below. In one or more embodiments of the invention, the document control module 334 can exchange data with other software applications, including, for example, project management applications (*e*.*g*., Prolog, Primavera Expedition®, etc.), estimating applications (*e*.*g*., Timberline®, etc.), Building Information Management (BIM) systems, and Geographic Information Systems (GIS®).

While the embodiments of the invention are described with a single database 330, one skilled in the art will appreciate that multiple databases 330 may be used to hold all data associated with the statistics module 322, efficiency module 324, authentication module 326, environmental correlation module 328, document control module 334 and/or other components of the cloud based server 106 necessary to perform the embodiments of the invention. Likewise, while the database 330 is depicted as centralized, multiple databases may hold the data in various combinations. Further, the database 330 may include data protection and security schemes to protect sensitive data from corruption, theft, attack, destruction, and other forms of intrusion and loss of integrity.

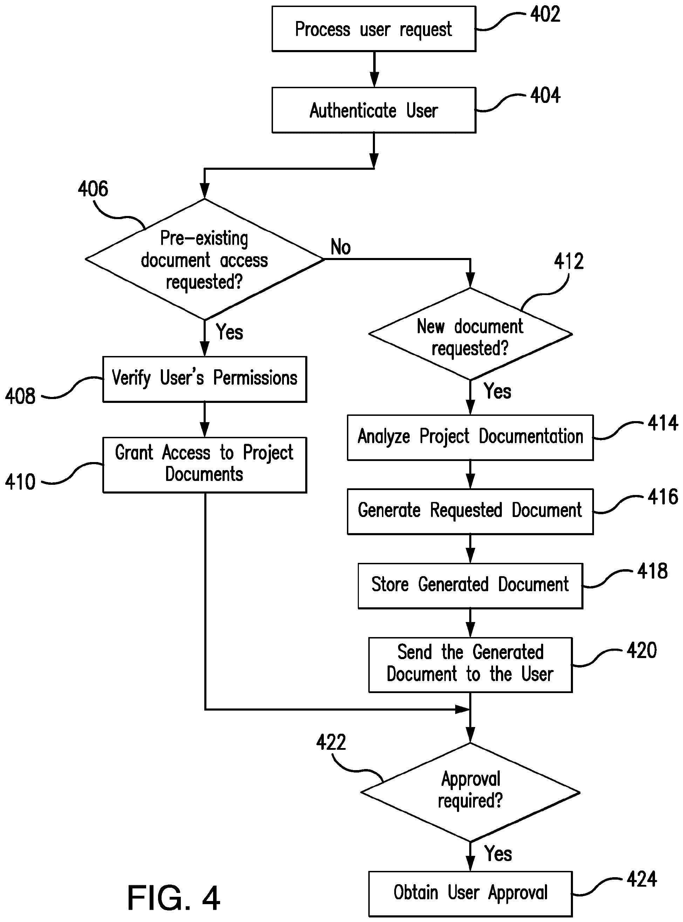

With reference now to FIG. 4, shown is a flowchart demonstrating implementation of the various exemplary embodiments regarding gathering and sharing project data from/with construction project teams in accordance with one or more embodiments of the invention. It is noted that the order of operations shown in FIG. 4 is not required, so in principle, the various operations may be performed out of the illustrated order. In one or more embodiments of the invention, one or more steps shown in FIG. 4 may be omitted, repeated, and/or performed in a different order than the order shown in FIG. 4. Accordingly, embodiments of the invention should not be considered limited to the specific arrangement of steps shown in FIG. 4.

In addition, those skilled in the art will recognize that certain steps may precede those shown in FIG. 4. For example, the project team members *(i.e.,* user 103) may create initial project documents (*e*.*g*., through text editor of mobile devices 105, 107) and/or upload an electronic or scanned document to the database 330.

Staring at operation 402, a user, which may be remote from a testing device (*e*.*g*., user 103) or which may be a user of the mobile device 105 and/or testing device 107, preferably logs into an API of a program implemented on the cloud-based server device 106 (as described above) to first select one or more projects supported by the cloud based server 106.

In one or more embodiments of the invention, as shown in step 404, the authentication module 326 authorizes access (*e*.*g*., authenticates a user's right to access) the project document management platform. Specifically, the authentication service may be configured to ensure that only authorized users are given access to the project document management platform. For example, users may be required to present a username and/or password, an encrypted digital signature, or any other type of authorization credential recognized as valid by the authentication module 326. In one or more embodiments, only users having contractor roles may be authorized (or given the access privileges necessary) to make or allow changes to certain project documents (*i.e*., statement of work documents).

In one or more embodiments, user authentication procedures may further allow the authentication module 326 to track the source of, and project data and/or modifications submitted by, a particular user (or user group) during each session. The identification of the user may be displayed along with the project data and/or document modifications made or proposed by that user. In addition, in one or more embodiments, a project team member may request a notification, for example, based on the identity of the user who enters key project data.

According to one or more embodiments of the invention, a user seeking to access to project management data may do so by presenting a request to the project document management platform. In step 406, the document control module 334 checks whether such request was received. The form of the request may vary. For example, a user may request access to pre-existing document of interest by using web-browser software resident on the user computing devices 103, 105, 107 running applications (e.g., Java applets or other applications), which may include APIs to the cloud-based document management service. Such APIs may provide users a variety of means to request access to one or more documents of interest. Examples of such means include, but are not limited to, a keyword search query, function buttons, scroll-down or pop-up menus, icons, navigation tools, mobile device functions, etc. Those skilled in the art will appreciate that many different methods of requesting access to documents exist, and the request function may take other forms now known or later developed.

In response to determining that the user requested access to a pre-existing project document (step 406, yes branch), in step 408, the document control module 334 authenticates a user's right to access the document, for example, by verifying user's security/permissions information provided by the authentication module 326. Access to some documents may require an additional level of security. For example, access to the user's time cards (time and attendance data) may require authentication using one or more secret questions, a personal identification number (PIN) unique to the particular user, and/or any other processes or network architecture necessary to prevent or restrict access by unauthorized parties.

Upon verifying user's authority, in step 410, the document control module 334 grants the user access to one or more documents of interest. In one embodiment, such access may comprise concurrent read-only access to such documents. In alternative embodiments of the invention, in step 410, users may modify the document content in a variety of ways *(e.g.,* edit floor plan information, update structured cable certification reports and summary reports, etc.). As with new project data, in one or more embodiments of the invention, modifications may be subject to review and acceptance by a particular user before they will be stored in the cloud-based database 330. As previously discussed, in step 410, the document control module 334 may grant users access to a variety of project related documents, such as, but not limited to, floor plan documentation, cable certification reports, and users' time cards information.

In one aspect, if in step 402 the user chooses a floor plan to work with, in step 410, the user may have various capabilities, including, but not limited to, adjusting of blueprints, sketching floor plans, adding additional accessories to their project floor plans. Typically, blueprints are printed and then manually edited to include the layout of low voltage outlets, electrical outlets, plumbing, etc. In the case of structured cable installers the floor plans are edited to not only include the location of a jack or IT closet, but also commonly include a suitable labeling schema. Thus, floor plans may comprise "live documents" that are constantly being updated by a variety of users. Advantageously, the project document management platform described herein enables real-time sharing of the floor plan documentation among various users, for example, by utilizing CAD editing tools. In some embodiments of the present invention, blueprints/ floor plans and the associated edits made by the user may require approval by one or more parties involved in a particular project.

In another aspect, in step 402, the user may choose a structured cable certification report to work with. Generally, the transmission performance characteristics of modem high speed data communication copper and fiber optic cabling systems are defined by various international and industry working bodies (standards organizations) to assure standard data communication protocols can successfully be transmitted across the transmission media. These data communication cabling systems (known as links) typically consist of connectors (modular 8 plugs and jacks) and some form of cabling. The requirements for important radio frequency (RF) transmission performance parameters such as, among others, Near End Crosstalk (NEXT), Return Loss, Insertion Loss, and Equal Level Far End Crosstalk (ELFEXT) are specified as a function of frequency. To assure compliance of cabling systems with these requirements, various field test instruments are available to certify that installed cabling meets the required frequency domain limits. These instruments perform various measurements to verify compliance with the standards and provide an overall Pass or Fail indication of the link. As discussed above, with regards to certification testing in a particular project, and as a non-limiting example, testing devices 107, such as the Versiv™ product from Fluke Network®, may be used to facilitate such cable certification. Certification test reports detail the test results of each copper or fiber outlet tested during installation. In some embodiments, such certification test reports might need end customer's approval before the contractor gets paid, for example.

In yet another aspect, the document control module 334 and/or other components of cloud-based server 106 may be integrated with and/or configured to communicate with either cloud-based or standalone time and attendance system utilized to track the time and attendance of project personnel, such as, but not limited to, cable installers. In one embodiment, such time and attendance system may be coupled to users' mobile/testing devices 103-107. In various embodiments each user may be able to swipe their individual ID Badge or other identifying card through the card readers of mobile/testing devices 103-107 to assign the appropriate time and attendance data into a digital time card. Accordingly, if in step 402, the user chooses a digital (*e*.*g*., weekly) time card of interest, in step 410, the document control module 334 may allow the user to enter notes and adjustments into the corresponding database record through one of the data entry interfaces such as the touch-screen 224 of mobile/testing devices 103-107. It is noted that these digital time cards are filled out with time being associated with one or more projects. Typically at the end of the week, *e.g.,* on Fridays, the time and attendance information stored for each project member may be accessed/updated, and an e-weekly time card may be generated that is then sent to an employee's manager who must approve the card before the employee can be paid, for example. Thus, advantageously, the project document management platform described herein facilitates sharing and distribution of time and attendance data (*i.e.,* time card data) related to one or more projects among authorized project team members.

Project data may be added to the project document management platform by creating it in a number of ways. For example, users can populate the database 330 with new documents and/or existing documents that have been appropriately reformatted. In one or more embodiments of the invention, new documents (*e*.*g*., electronic or hard copies) may be loaded into the project document management platform. In one or more embodiments of the invention, users may provide project data using audio means (*e*.*g*., voice recorder, transcription service, etc.). In one or more embodiments, new documents can be dynamically generated by the project document management platform as described below.

Returning to FIG. 4, in step 412, the document control module 334 may determine whether the user presented a request to add a new document in step 402. If the user selected generation of a new document function (step 412, yes branch), steps 414-420 may be performed next to generate at least a portion of one or more new documents, such as, but not limited to, requests for proposal (RFP), statement of work documents, change order documents, etc.

Generally, in the construction field, in soliciting subcontractors to bid for supplying the service or labor, contractors are required to provide a document containing a detailed list of project requirements (including floor plans and blueprints, for example) needed to supply the service/labor. This document is generally referred to as RFP document. Once the contractor receives all the bids from the various subcontractors/suppliers, it selects one of the bidders to supply the service based on the terms outlined in the RFP document. The contractor then creates an estimate of the work that will be done which may include a price for equipment, labor, etc. Historically, the creation of RFP documents has been a significant time-consuming, labor intensive and generally non-standardized process because it involves using complex legal precedents and project-specific or organization-specific rules which typically are not well understood by the authors of such documents. In general, the RFP document is specific to a project based on project-defining information. Depending on the industry, the terms RFP and RFQ (Request for Quotations) are often used interchangeably. The distinction is industry specific and for the purposes of this application, RFP is used for both. Once the RFP document is generated it may be sent to the requesting organization. If the contractor is awarded the project then a statement of work document may be generated next.

A statement of work is used to describe the scope of a project and sets forth the specific tasks that need to be completed by a subcontractor or other personnel for that project. The statement of work can also be supplemented with attachments (*i.e.,* floor plans, blueprints, etc.) that can be used to provide the subcontractor with detailed structural information and data that are related to the specific tasks in the statement of work. The subcontractor uses the statement of work to know what the subcontractor's responsibilities are for a particular project and to determine what the subcontractor has to generate or provide under the project. Typically, before commencing the project, contractors get end customers' approval.

Advantageously, once the statement of work is accepted and the construction project begins, the project document management platform can be used to assist construction professionals in monitoring and managing the project. Often during the progress of a construction project, changes need to be made either to the original blueprints/ floor plans or to other specific project documents. For example, the location of a jack may need to be changed, or the size of a room or IT closet may need to change, changing with it the dimensions of the walls and flooring associated with the room. These changes may be requested by the owner or the architect or may be determined necessary by the builder. At any given time, there may be multiple changes requested by multiple parties. According to an embodiment of the present invention, the project document management platform disclosed herein keeps track of all pending change orders and allows the construction professionals to easily and efficiently determine the status of pending change orders and determine the relationship between various change orders. Just like other documents described above, change orders typically need approval of one or more parties (contractors, end customers, etc.). In some embodiments, once change order approval has been received, the project document management platform implemented by the cloud based server 106 may dynamically update at least portions of the statement of work document described above.

Returning back to FIG. 4, in step 414, the document control module 334 analyzes project documentation already stored in the database 330. In the documentation analysis, the document control module 334 determines what, if any, documentation modifications or additions are required to document the implementation of the change orders, statements of work, RFPs, etc. For example, the document control module 334 may analyze project-defining information, such as project requirements, floor plans, and the like.

According to an embodiment of the present invention, next, in step 416, the requested document or a portion of the document is generated. In one embodiment, the document may be generated based on a number of criteria defined by users, for example, via the user prompting process. In such embodiment, a sequence of web pages may be accessed by the user via API running on their mobile/testing devices 103-107, wherein each web page presents a sequence of prompts or questions for enabling association of project-related information with appropriate project-defining criteria. It is noted that at least some project-related information may be entered by users using the APIs of the cloud based project document management platform. Optionally, the result of dynamic generation in step 416 is stored in the database 330 (step 418) of the cloud based project document management platform together with an identifier which is unique in the document management platform.

In step 420, at least a portion of the generated document is presented or sent to the requesting user by the document control module 334. In one or more embodiments of the invention, some users *(i.e.,* contractors, end users, etc.) may track edits and additions to project data. Accordingly, in step 420, the document control module 334 may also notify such user of the addition of project data and/or of submitted or accepted document modification. The form of that notification may vary, including using, for example, electronic mail, SMS or MMS texting, audio messaging, or interactive voice response (IVR) system. In one or more embodiments, users may set personal preferences for notifications of content revisions or additions and these notifications may be as granular as desired.

In one or more embodiments of the present invention, in step 422, the document control module 334 may automatically inquire whether the document generated in step 420 and/or pre-existing document modified in step 410 requires an approval of another user. In response to determining that user approval is required (step 422, yes branch), in step 424, such users are invited to review and approve the document. In one embodiment, this step may involve the document control module 334 sending a notification to the user which requests a specific document approval. Such notification may include a convenient hyperlink to the specific document.

In summary, various embodiments of the present invention disclose a robust cloud based solution that enables contractors and other construction project personnel to collaborate and edit documents using any computer or mobile device 103-107. In another aspect, the disclosed system also facilitates an approval process or document workflow that tracks documents as they are shared between various project parties *(i.e.,* contractors, their employees and the customers they work for) in real time.

With certain illustrated embodiments described above, it is to be appreciated that various non-limiting embodiments described herein may be used separately, combined or selectively combined for specific applications. Further, some of the various features of the above non-limiting embodiments may be used without the corresponding use of other described features. The foregoing description should therefore be considered as merely illustrative of the principles, teachings and exemplary embodiments of this invention, and not in limitation thereof.

It is to be understood that the above-described arrangements are only illustrative of the application of the principles of the illustrated embodiments. Numerous modifications and alternative arrangements may be devised by those skilled in the art without departing from the scope of the illustrated embodiments, and the appended claims are intended to cover such modifications and arrangements.

## Claims

1. A cloud-based computer server for providing a user access to project documentation, the cloud based server including:
a memory configured to store instructions;
at least one database configured to store a plurality of project documents;
a processor disposed in communication with said memory and at least one database, wherein said processor upon execution of the instructions is configured to process a request from a user of the client application to access one or more of the plurality of project documents and configured to grant the user access to the requested one or more project documents in response to successfully authenticating the user.

2. The cloud-based computer server as recited in claim 1, wherein the plurality of project documents includes at least one of a Request for Proposal (RFP) document specific to a project, a change order document related to the project, schematics of one or more structures related to the project, cable certification reports related to the project, and summary reports related to the project; and optionally
wherein the user request comprises a request to access a structured cable certification report stored in the at least one database.

3. The cloud-based computer server as recited in claim 1 or 2, wherein the user request comprises a request to generate a new project document and wherein the processor is further configured to dynamically generate a statement of work document in a predetermined format based on the plurality of project documents and configured to store the generated statement of work document in the at least one database; and optionally
wherein the processor is further configured to send a notification to one or more users in response to generating the statement of work document based on users' notification preferences.

4. The cloud-based computer server as recited in claim 3, wherein the processor is further configured to obtain approval of the generated statement of work by the one or more users.

5. The cloud-based computer server as recited in any of claims 1 to 4, wherein the user request comprises a request to generate a new project document and wherein the processor is further configured to dynamically generate a change order document specifying changes to an ongoing project and configured to store the generated change order document in the at least one database.

6. The cloud-based computer server as recited in claim 5, wherein the processor is further configured to obtain approval to one or more changes specified in the generated change order document from another user of the client application in response to successfully authenticating the another user.

7. The cloud-based computer server as recited in claim 6, wherein the processor is further configured to dynamically update the statement of work document in response to obtaining the approval to the one or more changes from the another user.

8. The cloud-based computer server as recited in any of claims 2 to 7, wherein granting the user access to the requested structured cable certification report comprises wirelessly sending the requested report to a testing device of the user.

9. A document management system providing a user access to project documentation, the system comprising:
a plurality of mobile and testing devices running a client application; and
a cloud-based server according to claim 1, wherein the server is wirelessly coupled to the plurality of mobile and testing devices, the server including:
at least one database configured to store a plurality of project documents; and
a processor configured to:
process a request from the client application, the request specifying access for a user to one or more of the plurality of project documents, the request including user's authentication information;
authenticate the user based on the received user's authentication information; and
grant the user access to the requested one or more project documents in response to successfully authenticating the user.

10. The document management system as recited in claim 9, wherein the plurality of project documents includes at least one of a Request for Proposal (RFP) document specific to a project, a change order document related to the project, and schematics of one or more structures related to the project; and optionally:
wherein the schematics of one or more structures related to the project comprise a blueprint document for a building structure, the blueprint document including a three dimensional digital representation of the building structure and a corresponding labeling schema; and/or
wherein the processor is further configured to present the blueprint document to one or more users of the client application and configured to obtain approval of the blueprint document by at least one of the one or more users.

11. The document management system as recited in claims 9 or 10, wherein the processor is further configured to dynamically generate a statement of work document in a predetermined format based on the plurality of project documents and configured to store the generated statement of work document in the at least one database.

12. The document management system as recited in claim 11, wherein the processor is further configured to provide access to one or more users to the generated statement of work document in response to successfully authenticating the one or more users; and optionally
wherein the processor is further configured to obtain approval of the generated statement of work by the one or more users.

13. The document management system as recited in claim 12, wherein the processor is further configured to generate a change order document related to the project according to information entered by the user of the client application and configured to send the generated change order document to another user of the client application.

14. The document management system as recited in claim 13, wherein the processor is further configured to obtain approval to one or more changes specified in the generated change order document from the another user of the client application in response to successfully authenticating the another user.

15. The document management system as recited in claim 14, wherein the processor is further configured to dynamically update the statement of work document in response to obtaining the approval to the one or more changes from the another user.
